(19) **Europäisches Patentamt**
**European Patent Office**
**Office européen des brevets**

(11) **EP 3 967 588 B1**

(12) **EUROPEAN PATENT SPECIFICATION**

(45) Date of publication and mention
of the grant of the patent:
**26.07.2023 Bulletin 2023/30**

(21) Application number: **20806071.5**

(22) Date of filing: **11.05.2020**

(51) International Patent Classification (IPC):
**B62L 3/08** *(2006.01)* **B60T 8/00** *(2006.01)*
**B60T 8/26** *(2006.01)* **B60T 7/22** *(2006.01)*
**B60T 8/17** *(2006.01)* **B62K 21/00** *(2006.01)*
**B62M 1/36** *(2013.01)*

(52) Cooperative Patent Classification (CPC):
**B60T 8/261; B60T 7/22; B60T 8/1706;**
**B60T 8/1766; B62K 21/00; B62M 1/12; B62M 1/26;**
**B62M 1/28; B62M 1/36;** B60T 2201/022

(86) International application number:
**PCT/JP2020/018866**

(87) International publication number:
**WO 2020/230764 (19.11.2020 Gazette 2020/47)**

(54) **LEANING VEHICLE EQUIPPED WITH BRAKE ASSIST CONTROL DEVICE**

NEIGUNGSFAHRZEUG MIT BREMSUNTERSTÜTZUNGSSTEUERVORRICHTUNG

VÉHICULE INCLINABLE ÉQUIPÉ D'UN DISPOSITIF DE COMMANDE D'ASSISTANCE AU FREINAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.05.2019 JP 2019089730**

(43) Date of publication of application:
**16.03.2022 Bulletin 2022/11**

(73) Proprietor: **Yamaha Hatsudoki Kabushiki Kaisha
Iwata-shi, Shizuoka 438-8501 (JP)**

(72) Inventors:
• **YASUKAWA, Risa**
**Iwata-shi, Shizuoka 438-8501 (JP)**
• **KOBAYASHI, Hiroshi**
**Iwata-shi, Shizuoka 438-8501 (JP)**
• **KISHI, Tomoaki**
**Iwata-shi, Shizuoka 438-8501 (JP)**
• **TORIGOE, Hoshimi**
**Iwata-shi, Shizuoka 438-8501 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) References cited:
**EP-A2- 3 124 370 DE-A1- 10 237 102
JP-A- H0 550 972 JP-A- 2006 069 303
JP-A- 2018 177 046**

## Description

[Technical Field]

The present invention relates to a leaning vehicle including a brake assist control device which is configured to control an assisting braking force based on a margin obtained based on the relationship between an obstacle and a host vehicle and on a brake operation by a rider.

[Background Art]

For example, Patent Literature 1 proposes a leaning vehicle including a brake assist control device which is configured to control the assisting braking force based on (i) a margin which corresponds to an obstacle and is obtained based on the relationship between the obstacle and a host vehicle and (ii) a brake operation by a rider. A further leaning vehicle including a brake assist control device for obstacles is known from EP 3 124 370 A2.

[Citation List]

[Patent Literatures]

[Patent Literature 1] Japanese Unexamined Patent Publication No. 2006 - 069303

[Summary]

[Technical Problem]

There is a need for a leaning vehicle including a brake assist control device which is configured to perform control different from the control recited in Patent Literature 1.

An object of the present invention is to provide a leaning vehicle which leans rightward in a vehicle left-right direction when turning right and leans leftward in the vehicle left-right direction when turning left, and includes a brake assist control device configured to perform control different from known control schemes.

[Solution to Problem]

The inventors of the present invention diligently studied the assisting braking force of a leaning vehicle including a brake assist control device configured to control the assisting braking force based on a margin obtained based on the relationship between an obstacle and the host vehicle and on a brake operation by the rider, and found a novel control scheme.

The novel control scheme is the control of the assisting braking force in a scene in which a state where the rider performs the brake operation but the assisting braking force is not generated transitions to a state where the assisting braking force is generated, based on a margin obtained based on the relationship between an obstacle and a host vehicle and a brake operation by the rider. Because the leaning vehicle includes a front wheel brake operator and a rear wheel brake operator, such a scene may occur. The novel control scheme is control of the assisting braking force, which starts from a state where the rider performs the brake operation but the assisting braking force is not generated. Through the scrutiny, the inventors noticed that riders perform brake operations in consideration of actions of leaning vehicles. A leaning vehicle includes a front wheel brake operator by which braking force is generated at a front wheel and a rear wheel brake operator by which braking force is generated at a rear wheel. For example, when braking force is generated at the front wheel in a state in which braking force is generated at neither the front wheel nor the rear wheel, a suspension of the front wheel contracts whereas a suspension of the rear wheel elongates, with the result that the leaning vehicle exhibits a pitching action. At this stage, loads acting on the front wheel and the rear wheel are varied. It is considered that the rider performs a brake operation in consideration of this action. The inventors conceived of the present invention because they found that the rider of the leaning vehicle performs a brake operation in consideration of the above-described action before generating the assisting braking force based on a margin obtained based on the relationship between an obstacle and the host vehicle and the brake operation by the rider. In other words, the inventors would not have conceived of the present invention unless they found that the rider of the leaning vehicle performs a brake operation in consideration of the above-described action before generating the assisting braking force based on a margin obtained based on the relationship between an obstacle and the host vehicle and the brake operation by the rider. In this description of the invention, the term "teaching" is to be understood as equivalent to "invention".

A leaning vehicle including a brake assist control device of an embodiment of the present teaching has the following structures.

The leaning vehicle comprises a brake assist control device which is mounted on a leaning vehicle body frame leaning rightward in a vehicle left-right direction when turning right and leaning leftward in the vehicle left-right direction when turning left and is configured to control the assisting braking force based on a front wheel brake operation amount of a front wheel brake operator, a rear wheel brake operation amount of a rear wheel brake operator, and a margin obtained based on the relationship between an obstacle and the leaning vehicle.

In scenes in each of which a state where a front wheel braking force and a rear wheel braking force not including the assisting braking force are generated transitions to a state where a front wheel braking force and a rear wheel braking force including the assisting braking force are generated, based on the front wheel brake operation amount, the rear wheel brake operation amount, and the margin, the brake assist control device controls the assisting braking force so that the state transitions of the front wheel braking force and the rear wheel braking force include at least one of a state transition 1 or a state transition 2 described below.

State transition 1: a state where the rear wheel braking force is larger than the rear wheel braking force in the ideal braking force distribution when one rider rides on the leaning vehicle transitions to a state of coming close to the ideal braking force distribution when one rider rides so that at least the front wheel braking force increases, and then transitions to a state of changing along the ideal braking force distribution when one rider rides so that the front wheel braking force and the rear wheel braking force increase occurs.

State transition 2: a state where the front wheel braking force is larger than the front wheel braking force in the ideal braking force distribution when one rider rides on the leaning vehicle transitions to a state of coming close to the ideal braking force distribution when one rider rides so that at least the rear wheel braking force increases, and then transitions to a state of changing along the ideal braking force distribution when one rider rides so that the front wheel braking force and the rear wheel braking force increase occurs.

A leaning vehicle including a brake assist control device of an embodiment of the present teaching may have the following structure.

The brake assist control device controls the assisting braking force so that the state transitions of the front wheel braking force and the rear wheel braking force include a state transition 3 described below. State transition 3: After the transition to a state of changing along the ideal braking force distribution when one rider rides so that the front wheel braking force and the rear wheel braking force increase occurs, transition to a state where the rear wheel braking force is increased whereas the front wheel braking force is decreased occurs.

A leaning vehicle including a brake assist control device of an embodiment of the present teaching may have the following structure.

The brake assist control device controls the assisting braking force so that the state transitions of the front wheel braking force and the rear wheel braking force include a state transition 4 described below. State transition 4: After the transition to a state of changing along the ideal braking force distribution when one rider rides so that the front wheel braking force and the rear wheel braking force increase occurs, transition to a state of departing from the ideal braking force distribution when one rider rides occurs.

A leaning vehicle including a brake assist control device of an embodiment of the present teaching may have the following structure.

In the state transition 1, the assisting braking force is controlled so that a state where the rear wheel braking force is larger than the rear wheel braking force in the ideal braking force distribution when one rider rides on the leaning vehicle transitions to a state of coming close to the ideal braking force distribution when one rider rides so that the front wheel braking force increases and the rear wheel braking force decreases.

In the state transition 2, the assisting braking force is controlled so that a state where the front wheel braking force is larger than the front wheel braking force in the ideal braking force distribution when one rider rides on the leaning vehicle transitions to a state of coming close to the ideal braking force distribution when one rider rides so that the rear wheel braking force increases and the front wheel braking force decreases.

A leaning vehicle including a brake assist control device of an embodiment of the present teaching may have the following structure.

The brake assist control device controls the assisting braking force so that the state transitions of the front wheel braking force and the rear wheel braking force include a state transition 5 described below. State transition 5: After the transition to a state of changing along the ideal braking force distribution when one rider rides so that the front wheel braking force and the rear wheel braking force increase occurs and then transition to a state where the total braking force which is the sum total of the front wheel braking force and the rear wheel braking force is increased occurs, thereafter a transition to a state where the total braking force is maintained occurs.

[Advantageous Effects]

In a leaning vehicle which leans rightward in the vehicle left-right direction when turning right and leans leftward in the vehicle left-right direction when turning left, the assisting braking force can be controlled in consideration of a scene in which a state where the rider performs a brake operation but the assisting braking force is not generated transitions to a state where the assisting braking force is generated, based on a front wheel brake operation amount of a front wheel brake operator operated by the rider, a rear wheel brake operation amount of a rear wheel brake operator operated by the rider, and a margin obtained based on the relationship between an obstacle and a host vehicle.

It is therefore possible to provide a leaning vehicle which leans rightward in a vehicle left-right direction when turning right and leans leftward in the vehicle left-right direction when turning left, and includes a brake assist control device configured to perform a control different from known control schemes.

[State Transition 6]

The brake assist control device may control the assisting braking force so that the state transitions of the front wheel braking force and the rear wheel braking force include a state transition 6 described below.

State transition 6: After the transition to a state of changing along the ideal braking force distribution when one rider rides so that the front wheel braking force and the rear wheel braking force increase occurs, transition to a state where the rear wheel braking force is increased and the front wheel braking force is decreased while the total braking force is maintained occurs.

[State Transition 7]

The brake assist control device may control the assisting braking force so that the state transitions of the front wheel braking force and the rear wheel braking force include a state transition 7 described below.

State transition 7: when the vehicle speed decreases after the transition to the state of changing along the ideal braking force distribution when one rider rides so that the front wheel braking force and the rear wheel braking force increase occurs, or during the transition to the state of changing along the ideal braking force distribution when one rider rides so that the front wheel braking force and the rear wheel braking force increase, transition to a state where the rear wheel braking force is increased whereas the front wheel braking force is decreased occurs.

[State Transition 8]

The brake assist control device may control the assisting braking force so that the state transitions of the front wheel braking force and the rear wheel braking force include a state transition 8 described below.

State transition 8: After the transition to a state of changing along the ideal braking force distribution when one rider rides so that the front wheel braking force and the rear wheel braking force increase occurs, transition to a state where the front wheel braking force and the rear wheel braking force are maintained occurs.

[State Transition 9]

The brake assist control device may control the assisting braking force so that the state transitions of the front wheel braking force and the rear wheel braking force include a state transition 9 described below.

State transition 9: After the transition to a state of changing along the ideal braking force distribution when one rider rides so that the front wheel braking force and the rear wheel braking force increase occurs and then transition to a state where the front wheel braking force and the rear wheel braking force are maintained occurs, transition to a state where the front wheel braking force and the rear wheel braking force are increased occurs.

[Ideal Braking Force Distribution of Leaning Vehicle When One Rider Rides]

An ideal braking force distribution when one rider rides on the leaning vehicle in the present teaching and the embodiments is an ideal braking force distribution calculated with the assumption that the load on the leaning vehicle is only one rider who has a typical weight. The ideal braking force distribution when one rider rides on the leaning vehicle is calculated by a known method. The weight of the rider is, for example, 50kg. This weight of the rider is a relatively lightweight as compared to an average weight of Japanese people including women. The ideal braking force distribution when one rider rides on the leaning vehicle is a distribution of the front wheel braking force and the rear wheel braking force, which is most efficient for generating deceleration (negative acceleration). Only one ideal braking force distribution when one rider rides is set for a single value of total braking force. In other words, only one ideal braking force against a front wheel and only one ideal braking force against a rear wheel are set for a single value of total braking force.

Ideal braking force $B_f[N]$ against the front wheel and ideal braking force $B_r[N]$ against the rear wheel are calculated by the following mathematical expression, in accordance with a road surface $\mu$ (coefficient of friction on a road). In the expression, $\alpha_m$ indicates a deceleration coefficient, $W[N]$ indicates vehicle weight, $W_{f0}[N]$ indicates a front wheel shared load at vehicle stop, $W_{r0}[N]$ indicates a rear wheel shared load at vehicle stop, $H[m]$ indicates ground height of the gravity center, and $L[m]$ indicates the wheelbase. The ideal braking force distribution when one rider rides is therefore calculated from vehicle dimensions. Examples of the dimensions include the vehicle weight, the distance in the vehicle front-rear direction between the gravity center and the grounding point of a front wheel, the distance in the vehicle front-rear direction between the gravity center and the grounding point of a rear wheel, and the ground height of the gravity center.

[Expression 1]

$$B_f = \alpha_m \times \left( W_{f0} + \frac{\alpha_m \times H \times W}{L} \right)$$

$$B_r = \alpha_m \times \left( W_{r0} - \frac{\alpha_m \times H \times W}{L} \right)$$

When two occupants including a rider ride on a leaning vehicle, a brake assist control device of the present teaching may control the braking force by utilizing the ideal braking force distribution when one rider rides according to the present teaching or an ideal braking force distribution when two occupants ride. Hereinafter, the ideal braking force distribution when one rider rides will be simply referred to as the ideal braking force distribution.

[Definition of State of Coming Close to Ideal Braking Force Distribution When One Rider Rides]

A state of coming close to the ideal braking force distribution when one rider rides in the present teaching and the embodiments includes a state of coming close to a position on the ideal braking force distribution when one rider rides from a position not on the ideal braking force distribution when one rider rides. In this case, the brake assist control device controls at least one of the front wheel braking force or the rear wheel braking force so that the front wheel braking force and the rear wheel braking force come close to the ideal braking force distribution when one rider rides. The state of coming close to the ideal braking force distribution when one rider rides includes a state where the above-described control of causing the front wheel braking force and the rear wheel braking force to come close to the ideal braking force distribution has been done. For example, the state of coming close to the ideal braking force distribution when one rider rides is a state of coming close to a position on the ideal braking force distribution when one rider rides from a position not on the ideal braking force distribution when one rider rides and reaching a position immediately before the ideal braking force distribution when one rider rides. For example, the state of coming close to the ideal braking force distribution when one rider rides is a state of coming close to a position on the ideal braking force distribution when one rider rides from a position not on the ideal braking force distribution when one rider rides and reaching the position on the ideal braking force distribution when one rider rides. For example, the state of coming close to the ideal braking force distribution when one rider rides is a state of coming close to a position on the ideal braking force distribution when one rider rides from a position not on the ideal braking force distribution when one rider rides, going across the ideal braking force distribution when one rider rides, and reaching a position not on the ideal braking force distribution when one rider rides. As such, the state of coming close to the ideal braking force distribution when one rider rides encompasses a case where the shortest distance from the last position to the ideal braking force distribution when one rider rides is longer than the shortest distance from the first position to the ideal braking force distribution when one rider rides. A change away from the ideal braking force distribution when one rider rides, which is encompassed in part of the state of coming close to the ideal braking force distribution when one rider rides in the present teaching and the embodiments is not encompassed in a state of departing from the ideal braking force distribution when one rider rides in the present teaching and the embodiments. A state of coming close to the ideal braking force distribution when two occupants ride is identical with the state of coming close to the ideal braking force distribution when one rider rides, except that one rider is replaced with two occupants.

[State of Changing Along Ideal Braking Force Distribution When One Rider Rides]

A state of changing along the ideal braking force distribution when one rider rides in the present teaching and the embodiments encompasses a state where the front wheel braking force and the rear wheel braking force change on the ideal braking force distribution when one rider rides and a state where the front wheel braking force and/or the rear wheel braking force change while keeping a distance from the ideal braking force distribution when one rider rides. This distance may not be constant. The ideal braking force distribution when one rider rides expressed by a curved line. However, the state of changing along the ideal braking force distribution when one rider rides may be a state of changing linearly along the ideal braking force distribution when one rider rides. A state changing along the ideal braking force distribution when two occupants ride is identical with the state changing along the ideal braking force distribution when one rider rides, except that one rider is replaced with two occupants.

In at least one of the state transition 1 and the state transition 2 described above, the brake assist control device of the present teaching and the embodiments may control the assisting braking force so that, for example, transition to a state of changing along the ideal braking force distribution when one rider rides within a range in which the rear wheel braking force is larger than the ideal braking force distribution when one rider rides occurs. Furthermore, for example, the assisting braking force may be controlled so that transition to a state of changing along the ideal braking force distribution when one rider rides within a range excluding a range in which the rear wheel braking force is smaller than the ideal braking force distribution when one rider rides occurs. The range excluding the range in which the rear wheel braking force is smaller than the ideal braking force distribution when one rider rides encompasses the ideal braking force distribution when one rider rides. Furthermore, for example, the assisting braking force may be controlled so that transition to a state of changing along the ideal braking force distribution when one rider rides within a range in which the rear wheel braking force is smaller than the ideal braking force distribution when one rider rides occurs.

In at least one of the state transition 1 and the state transition 2 described above, the brake assist control device of the present teaching and the embodiments may control the assisting braking force so that, for example, transition to a state of changing along the ideal braking force distribution when one rider rides within a range excluding a range in which the rear wheel braking force is larger than the ideal braking force distribution when two occupants ride occurs. Furthermore, for example, the assisting braking force may be controlled so that transition to a state of changing along the ideal braking force distribution when one rider rides within a range in which the rear wheel braking force is smaller than the ideal braking force distribution when two occupants ride occurs. Furthermore, for example, the assisting braking force may be controlled so that transition to a state of changing along the ideal braking force distribution when one rider rides within a range excluding both a range in which the rear wheel braking force is larger than the ideal braking force distribution when two occupants ride and a range in which the rear wheel braking force is smaller than the ideal braking force distribution when one rider rides occurs. Furthermore, for example, the assisting braking force may be controlled so that transition to a state of changing along the ideal braking force distribution when one rider rides within a range which excludes a range in which the rear wheel braking force is larger than the ideal braking force distribution when two occupants ride and is included in a range in which the rear wheel braking force is larger than the ideal braking force distribution when one rider rides occurs. Furthermore, for example, the assisting braking force may be controlled so that transition to a state of changing along the ideal braking force distribution when one rider rides within a range which is included in a range in which the rear wheel braking force is smaller than the ideal braking force distribution when two occupants ride and excludes a range in which the rear wheel braking force is smaller than the ideal braking force distribution when one rider rides occurs. Furthermore, for example, the assisting braking force may be controlled so that transition to a state of changing along the ideal braking force distribution when one rider rides, within a range between the ideal braking force distribution when two occupants ride and the ideal braking force distribution when one rider rides occurs.

In the present teaching and the embodiments, a sentence "transition to the state of coming close to the ideal braking force distribution when one rider rides occurs and then transitions to the state of changing along the ideal braking force distribution when one rider rides occurs" may indicate that, for example, the state of coming close to the ideal braking force distribution when one rider rides transitions to the state of changing along the ideal braking force distribution when one rider rides. When the state of coming close to the ideal braking force distribution when one rider rides transitions to the state of changing along the ideal braking force distribution when one rider rides, the brake assist control device of the present teaching and the embodiments controls the assisting braking force so that the ratio of an amount of change of the front wheel braking force to an amount of change of the rear wheel braking force in the state of coming close to the ideal braking force distribution when one rider rides is different from the ratio of an amount of change of the front wheel braking force to an amount of change of the rear wheel braking force in the state of changing along the ideal braking force distribution when one rider rides. Depending on the magnitudes of the front wheel braking force and the rear wheel braking force at the start of the state of coming close to the ideal braking force distribution when one rider rides, the brake assist control device of the present teaching and the embodiments may control the assisting braking force so that the ratio of an amount of change of the front wheel braking force to an amount of change of the rear wheel braking force in the state of coming close to the ideal braking force distribution when one rider rides is identical with the ratio of an amount of change of the front wheel braking force to an amount of change of the rear wheel braking force in the state of changing along the ideal braking force distribution when one rider rides.

[State of Departing from Ideal Braking Force Distribution When One Rider Rides]

A state of departing from the ideal braking force distribution when one rider rides in the present teaching and the embodiments is a state where the front wheel braking force and/or the rear wheel braking force changes from a position where the shortest distance from the ideal braking force distribution when one rider rides is short to a position where the shortest distance from the ideal braking force distribution when one rider rides is long. The state of departing from the ideal braking force distribution when one rider rides in the present teaching and the embodiments does not encompass a change of departing in part of the state of coming close to the ideal braking force distribution when one rider rides in the present teaching and the embodiments. A state of departing from the ideal braking force distribution when two occupants ride is identical to the state of departing from the ideal braking force distribution when one rider rides, except that one rider is replaced with two occupants.

[Leaning Vehicle]

A leaning vehicle of the present teaching and embodiments is a vehicle which includes a leaning vehicle body frame structured to lean rightward in the vehicle left-right direction when turning right and lean leftward in the vehicle left-right direction when turning left. The vehicle includes at least one front wheel and at least one rear wheel. The leaning vehicle may include two front wheels and one or two rear wheels. The leaning vehicle may include one front wheel and one or two rear wheels. In the leaning vehicle, either the front wheel or the rear wheel may be steered. The leaning vehicle includes a driving source. The driving source may be an engine, a motor driven by electricity, or a hybrid driving source including both an engine and a motor. The leaning vehicle body frame is a member which mainly receives stress in the leaning vehicle. The leaning vehicle body frame may be a frame formed by combining a plurality of components, or may be an integrally-molded frame.

[Brake Operation and Brake Operation Amount]

The leaning vehicle includes a front wheel brake, a rear wheel brake, and at least one brake operator. The front wheel brake is configured to apply the front wheel braking force to the front wheel. The rear wheel brake is configured to apply the rear wheel braking force to the rear wheel. The front wheel brake, the rear wheel brake, or a combination of the front wheel brake and the rear wheel brake may be simply referred to as a brake. The brake operator may be a lever operated by a hand of the rider or a pedal operated by a foot of the rider. The leaning vehicle may include a front wheel brake operator and a rear wheel brake operator as the brake operator. The front wheel brake operator may be arranged to be able to operate not only the front wheel brake but also the rear wheel brake. The rear wheel brake operator may be arranged to be able to operate not only the rear wheel brake but also the front wheel brake. The front wheel brake and the rear wheel brake may be operated by a single brake operator. A brake operation in the present teaching and the embodiments indicates an action to operate a brake operator provided in the leaning vehicle. A brake operation amount indicates to what extent the rider performs the brake operation. The brake operation amount may be information directly indicating the brake operation amount, or information indirectly indicating the brake operation amount, e.g., information correlated to the brake operation amount. Acquisition of a brake operation amount indicates that information indicating a brake operation amount is directly acquired or information indicating a brake operation amount is indirectly acquired.

[Brake Assist Control Device]

A brake assist control device of the present teaching and the embodiments is a controller having a function of controlling the assisting braking force. The brake assist control device may have other functions. For example, when an ABS control device having a function of antilock braking system (ABS) has a function of controlling the assisting braking force, the ABS control device is regarded as a brake assist control device. The brake assist control device of the present teaching and the embodiments is electrically connected to a brake, a margin related sensor which is required to determine a margin which is acquired based on the relationship between an obstacle and a host vehicle, and a brake operation amount related sensor which is required to acquire an operation amount of a brake operator. The brake assist control device of the present teaching and the embodiments may be electrically connected to a leaning angle related sensor which is required to acquire at least one of leaning angular speed or leaning angular acceleration. Examples of the leaning angle related sensor include an IMU (Inertial Measurement Unit), a GPS (Global Positioning System), and a camera for obtaining a leaning angle from an image. The margin related sensor is, for example, a camera taking images ahead of the leaning vehicle, a millimeter wave radar, a LIDAR, or a combination of these devices. Examples of the brake operation amount related sensor include an angular sensor configured to detect a rotational angle of the brake operator and a hydraulic pressure sensor configured to detect hydraulic pressure generated by the brake operator. Each sensor may be of any type as long as the functions described above are achieved. The brake has a function of generating braking force upon receiving an electrical signal from the brake assist control device. The brake may be of any type as long as the function described above is achieved. The brake assist control device may be electrically connected to a sensor different from the sensors above. The brake assist control device may be controlled based on a signal acquired by a sensor different from the sensors above. The brake assist control device may have a function of the antilock braking system (ABS). In this case, the brake assist control device may be electrically connected to a sensor capable of detecting a slipping state of a wheel. The brake assist control device may control only braking force applied to the front wheel, for example. The brake assist control device may control only braking force applied to the rear wheel, for example. The brake assist control device may control braking forces applied to the front wheel and the rear wheel, for example. The brake assist control device may control total braking force applied to the front wheel and the rear wheel. The brake assist control device may control a mechanically-connected brake which is a brake mechanically connected to a brake operator. The brake assist control device may control an electrically-connected brake which is a brake not mechanically but electrically connected to a brake operator. The brake assist control device may control a brake that involves both mechanical connection and electrical connection.

[Margin Acquired Based on Relationship between Obstacle and Host Vehicle]

In the present teaching and the embodiments, a margin acquired based on the relationship between an obstacle and a host vehicle is a margin when a rider deals with an obstacle. The margin is acquired based on the relative speed between an obstacle and a host vehicle, for example. The margin is information such as a numerical value and the magnitude of an analog signal. When the margin is higher than a reference value, there is a margin in comparison with the reference value. The reference value may be set in advance in accordance with each type of the leaning vehicles. The margin may be corrected or learned based on signals obtained by various types of sensors. The margin may be information directly indicating the margin or information indirectly indicating the margin such as information correlated with the margin. Acquisition of a margin indicates acquisition of information directly indicating the margin or acquisition of information indirectly indicating the margin.

[Assisting Braking Force]

The assisting braking force of the present teaching and the embodiments is part of a braking force generated by a brake operation by a rider, and is increased or decreased under the control of the brake assist control device based on (i) a margin corresponding to an obstacle and acquired based on the relationship between the obstacle and the host vehicle and (ii) a brake operation by the rider. For example, the assisting braking force is braking force which is increased or decreased under the control of the brake assist control device so that braking force generated by an operation of the brake operator by the rider is different when the operation amount of the brake operator is the same but another condition such as the margin and the leaning angle of the leaning vehicle is different. For example, the assisting braking force is braking force added, under the control of the brake assist control device, to mechanical braking force generated by an operation of the brake operator by the rider, when the brake operator is mechanically connected to the brake. The mechanical connection is, for example, connection by a pipe filled with brake oil or connection by a brake wire. For example, when the brake operator is connected to the brake not mechanically but electrically, it is difficult to clearly discern only the assisting braking force from the braking force generated by an operation of the brake operator by the rider. However, for example, even when the brake operator is connected to the brake not mechanically but electrically, it is considered that the braking force includes the assisting braking force increased or decreased under the control of the brake assist control device, if the braking force generated in response to the same operation amount of the brake operator is different due to the difference in a condition other than the operation amount of the brake operator. Meanwhile, braking force which is increased or decreased not based on (i) a margin corresponding to an obstacle determined and acquired based on the relationship between the obstacle and the host vehicle and (ii) a brake operation by the rider, e.g., braking force increased or decreased by the ABS is not the assisting braking force of the present teaching and the embodiments.

[Control Amount of Controlling the Assisting Braking Force by Brake Assist Control Device]

In the present teaching and the embodiments, a control amount of controlling the assisting braking force by the brake assist control device can be set for each type of the leaning vehicles. For example, the control amount may be set so that the assisting braking force is a constant amount, a constant magnification, or a predetermined amount. For example, the control amount may be a control amount obtained by a calculation, a control amount obtained from a map set in advance, or a combination of them. The control amount may be corrected or learned based on signals obtained by various types of sensors. The assisting braking force may be zero. An operation to control the assisting braking force to be zero may be a control by which the control of setting the assisting braking force is terminated or circumvented, or a control by which the assisting braking force is set at zero. The control of the assisting braking force to be zero is not limited to any particular control scheme. In this case, the control amount may be zero. An operation to control the control amount to be zero may be a control by which the control of setting the control amount is terminated or circumvented, or a control by which the control amount is set at zero. The control of the control amount to be zero is not limited to any particular control scheme.

[Leaning Angle]

A leaning angle in the present teaching and the embodiments is a tilt angle in the left-right direction of the leaning vehicle relative to the vertical direction. The tilt angle in the left-right direction of the leaning vehicle relative to the vertical direction indicates the tilt angle in the left-right direction of the leaning vehicle body frame of the leaning vehicle relative to the vertical direction. When the leaning angle is zero, the leaning vehicle is in an upright state in the left-right direction of the leaning vehicle. A state in which the absolute value of the leaning angle decreases is a state in which the leaning vehicle shifts from a state of leaning in the left-right direction of the leaning vehicle to the upright state. A state in which the absolute value of the leaning angle increases is a state in which the leaning vehicle shifts from the upright state to the state of leaning in the left-right direction of the leaning vehicle. The time change rate of the leaning angle during this shift is equivalent to the leaning angular speed. The time change rate of the leaning angular speed is equivalent to the leaning angular acceleration. The leaning angular speed or the leaning angular acceleration may be information directly indicating the leaning angular speed or the leaning angular acceleration, or may be information indirectly indicating the leaning angular speed or the leaning angular acceleration, such as information correlated to the leaning angular speed or the leaning angular acceleration. Acquisition of the leaning angular speed or the leaning angular acceleration indicates acquisition of information directly indicating the leaning angular speed or the leaning angular acceleration or acquisition of information indirectly indicating the leaning angular speed or the leaning angular acceleration.

[Technical Differences from Other Driving Assist Control Devices and Combinations Thereof]

The brake assist control device of the present teaching and the embodiments is a driving assist control device of one type. In addition to this, as a driving assist control device, an AEB (Autonomous Emergency Braking) control device has been proposed. These two devices are technologically different in the following points. The brake assist control device is a technology of controlling the assisting braking force based on an operation of the brake operator by the rider. Meanwhile, the AEB control device is a technology of automatically controlling the braking force even if the brake operator is not operated. These two control devices are significantly different technologies from the viewpoint of the brake operation by the rider. In addition to the above, the brake assist control device is a technology designed for scenes in which the brake operator is operated by the rider. The AEB control device is a technology designed for scenes in which the brake operator is not operated. These two control devices are significantly different technologies from the viewpoint of the brake operation by the rider. The brake assist control device may be combined with the AEB control device even though they are different technologies. For example, when an ABS control device having an autonomous emergency braking (AEB) function has a function of controlling the assisting braking force, the AEB control device is regarded as a brake assist control device.

[Specific Means]

The hardware structures of the brake assist control device of the present teaching and the embodiments and of the leaning vehicle including this control device are not detailed in this description. Because the features of the present teaching and the embodiments are technologies related to control, a person with ordinary skill in the art would understand that the leaning vehicle including the brake assist control device recited in the present teaching and the embodiments can be embodied by the hardware structures of a brake assist control device recited in Patent Literature 1 or another known document and the hardware structures of a leaning vehicle including this control device. The figure of relationship of control schemes indicates each brake operation amount and each braking force. A person with ordinary skill in the art would understand what is meant by each figure, and would be able to embody the disclosure by means of a known hardware structure.

[To Control Braking Force]

In the present teaching and the embodiments, to control braking force indicates to control the brake in order to acquire braking force. For example, when a brake whose braking force varies in accordance with a hydraulic pressure is employed, to control braking force indicates to control the hydraulic pressure. For example, when a drum brake whose braking force varies in accordance with the rotational angle of a lever is employed, to control braking force indicates to control the rotational angle of the lever. A specific target of control is changed in accordance with the type of the brake.

[To Increase / Decrease / Maintain Braking Force]

In the present teaching and the embodiments, to increase / decrease / maintain total braking force is not limited to a case where actual total braking force is increased / decreased / maintained. To increase / decrease / maintain total braking force encompasses a case where control of increasing / decreasing / maintaining total braking force is considered to be performed even if actual total braking force is not increased / decreased / maintained. To increase / decrease / maintain the front wheel braking force and to increase / decrease / maintain the rear wheel braking force are similarly defined in the present teaching and the embodiments.

[Control Based on A]

In the present teaching and the embodiments, the control based on A does not indicate that information used for the control is limited to A. The control based on A indicates that information based on which the control is performed includes information which is not A, and encompasses a case where the control is performed based on A and information which is not A.

<Others>

In the present teaching and embodiments, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

In the claims, when the number of a constituent feature is not clearly specified and the constituent feature is expressed in a singular form in English, the number of the constituent feature may be more than one in the present teaching. In the present teaching, the number of the constituent features may be only one.

In the present teaching and the embodiments, terms "including", "comprising", "having", and derivatives thereof are used to encompass not only listed items and equivalents thereof but also additional items.

In the present teaching and the embodiments, the terms "mounted", "connected", "coupled", and "supported" are used in a broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless otherwise defined, all terms (technical and scientific terms) used in this specification and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

In the present teaching and the embodiments, the term "preferable" is non-exclusive. The term "preferable" means "preferable but not limited to". In this specification, an arrangement which is "preferable" exerts at least the above-described effects of the arrangement of claim 1. In this specification, the term "may" is non-exclusive. The term "may" indicate "may but not must". In this specification, an arrangement which is explained by using the term "may" exerts at least the above-described effects of the arrangement of claim 1.

In the present teaching and the embodiments, the preferred arrangements of the different aspects described above may be variously combined. Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as an embodiment other than the below-described embodiment. Furthermore, the present teaching may be implemented by suitably combining below-described embodiments and modifications.

[Brief Description of Drawings]

FIG. 1 outlines a leaning vehicle of the First Embodiment of the present teaching.
FIG. 2 outlines a leaning vehicle of the Second Embodiment of the present teaching.
FIG. 3 outlines a leaning vehicle of the Third Embodiment of the present teaching.
FIG. 4 outlines a leaning vehicle of the Fourth Embodiment of the present teaching.
FIG. 5 outlines a leaning vehicle of the Fifth Embodiment of the present teaching.
FIG. 6 outlines a leaning vehicle of the Sixth Embodiment of the present teaching.

[Description of Embodiments]

[Definition of Directions]

In the drawings, U indicates a direction upward from a leaning vehicle, D indicates a direction downward from the leaning vehicle, L indicates a direction leftward from the leaning vehicle, R indicates a direction rightward from the leaning vehicle, F indicates a direction forward from the leaning vehicle, and Re indicates a direction rearward from the leaning vehicle.

[Definitions of Arrows in Figures]

An arrow indicating a state of changing along an ideal braking force distribution when one rider rides, a state of departing from the ideal braking force distribution when one rider rides, or a state of coming close to the ideal braking force distribution when one rider rides may be a linear line, a curved line, a combination of a linear line and a curved line, or a combination of linear lines.

[First Embodiment]

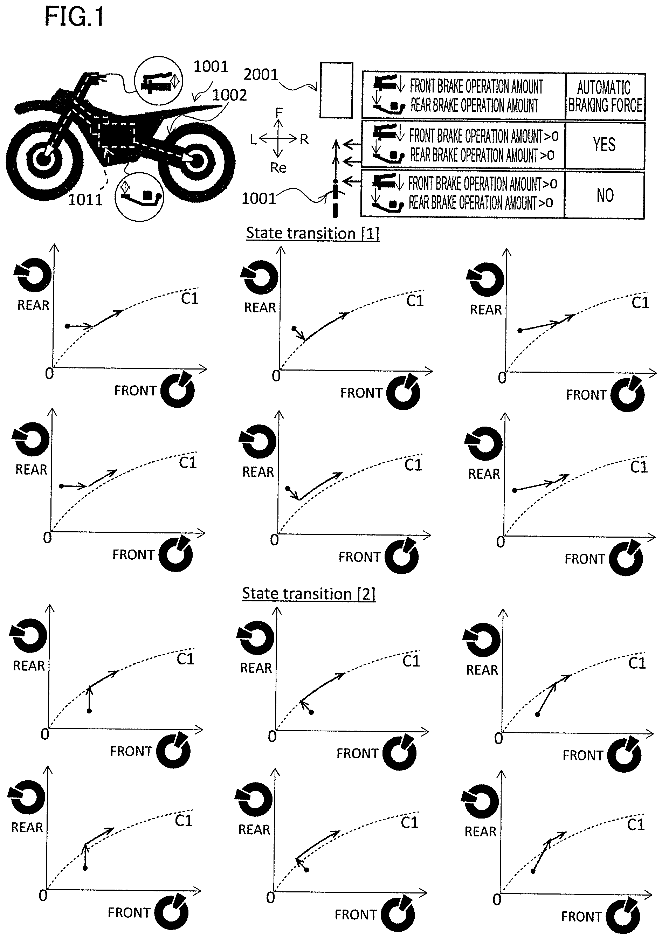

The following will describe a leaning vehicle 1001 of the First Embodiment of the present teaching with reference to FIG. 1. The leaning vehicle 1001 includes a brake assist control device 1011 mounted on a leaning vehicle body frame 1002 which leans rightward in the vehicle left-right direction when turning right and leans leftward in the vehicle left-right direction when turning left. The brake assist control device 1011 is configured to control the assisting braking force based on a front wheel brake operation amount of a front wheel brake operator, a rear wheel brake operation amount of a rear wheel brake operator, and a margin acquired based on the relationship between an obstacle and a host vehicle. In scenes in each of which a state where the front wheel braking force and the rear wheel braking force not including the assisting braking force are generated transitions to a state where the front wheel braking force and the rear wheel braking force including the assisting braking force are generated, based on the front wheel brake operation amount, the rear wheel brake operation amount, and the margin, the brake assist control device 1011 controls the assisting braking force so that the state transitions of the front wheel braking force and the rear wheel braking force include at least one of the state transition 1 or the state transition 2 described below.

State transition 1: a state where the rear wheel braking force is larger than the rear wheel braking force in the ideal braking force distribution C1 when one rider rides on the leaning vehicle transitions to a state of coming close to the ideal braking force distribution when one rider rides so that at least the front wheel braking force increases, and then transitions to a state of changing along the ideal braking force distribution C1 when one rider rides so that the front wheel braking force and the rear wheel braking force increase occurs.

State transition 2: a state where the front wheel braking force is larger than the front wheel braking force in the ideal braking force distribution C1 when one rider rides on the leaning vehicle 1001, transitions to a state of coming close to the ideal braking force distribution C1 when one rider rides so that at least the rear wheel braking force increases, and then transitions to a state of changing along the ideal braking force distribution when one rider rides so that the front wheel braking force and the rear wheel braking force increase occurs.

In the state transition 1, the state where the front wheel braking force and the rear wheel braking force not including the assisting braking force are generated, encompasses at least a state where the rear wheel braking force is larger than the rear wheel braking force in the ideal braking force distribution C1 when one rider rides on the leaning vehicle 1001. In the state transition 2, the state where the front wheel braking force and the rear wheel braking force not including the assisting braking force are generated encompasses at least a state where the front wheel braking force is larger than the front wheel braking force in the ideal braking force distribution C1 when one rider rides on the leaning vehicle 1001.

In the state of coming close to the ideal braking force distribution C1 when one rider rides so that at least the front wheel braking force increases after the state where the rear wheel braking force is larger than the rear wheel braking force in the ideal braking force distribution C1 when one rider rides on the leaning vehicle 1001, the rear wheel braking force may be maintained, decreased, or increased.

In the state of coming close to the ideal braking force distribution C1 when one rider rides so that at least the rear wheel braking force increases after the state where the front wheel braking force is larger than the front wheel braking force in the ideal braking force distribution C1 when one rider rides on the leaning vehicle 1001, the front wheel braking force may be maintained, decreased, or increased. The state of changing along the ideal braking force distribution when one rider rides may be a state of changing on the ideal braking force distribution C1 when one rider rides or a state of changing while keeping a distance from the ideal braking force distribution when one rider rides. When an arrow indicating the state of coming close to the ideal braking force distribution when one rider rides and an arrow indicating the state of changing along the ideal braking force distribution when one rider rides are both linear lines, the two linear arrows are not on a single linear line. This indicates that the ratio of an amount of change of the front wheel braking force to an amount of change of the rear wheel braking force in the state of coming close to the ideal braking force distribution when one rider rides is different from the ratio of an amount of change of the front wheel braking force to an amount of change of the rear wheel braking force in the state of changing along the ideal braking force distribution when one rider rides.

[Second Embodiment]

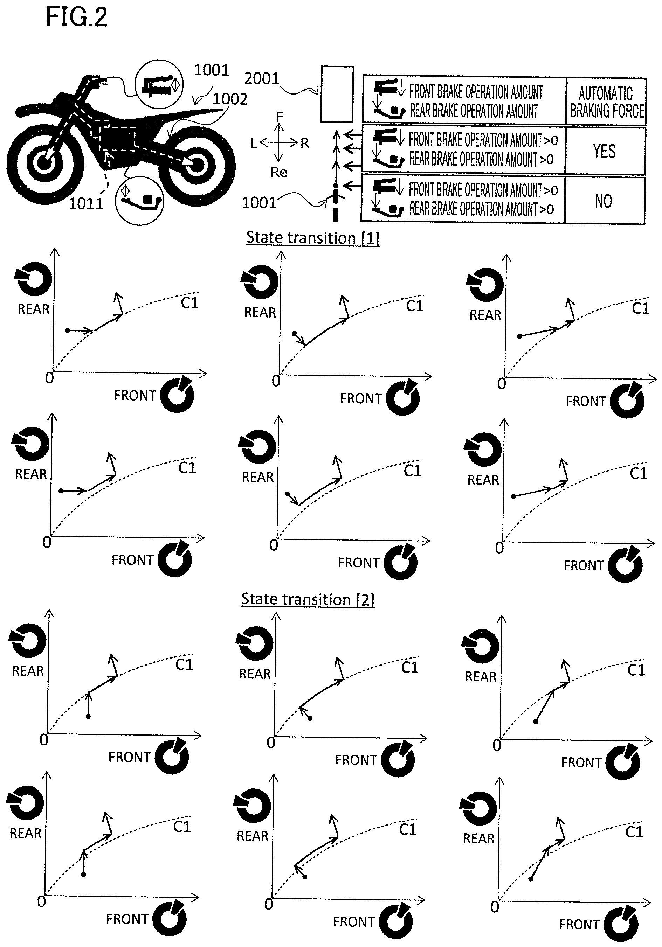

The following will describe a leaning vehicle 1001 of the Second Embodiment of the present teaching with reference to FIG. 2. A brake assist control device 1011 of Second Embodiment includes the following arrangements, in addition to those of the First Embodiment. The brake assist control device 1011 controls the assisting braking force so that the state transitions of the front wheel braking force and the rear wheel braking force include the state transition 3 described below.

State transition 3: After the transition to a state of changing along the ideal braking force distribution C1 when one rider rides, so that the front wheel braking force and the rear wheel braking force increase occurs, transition to a state where the rear wheel braking force is increased whereas the front wheel braking force is decreased occurs.

[Third Embodiment]

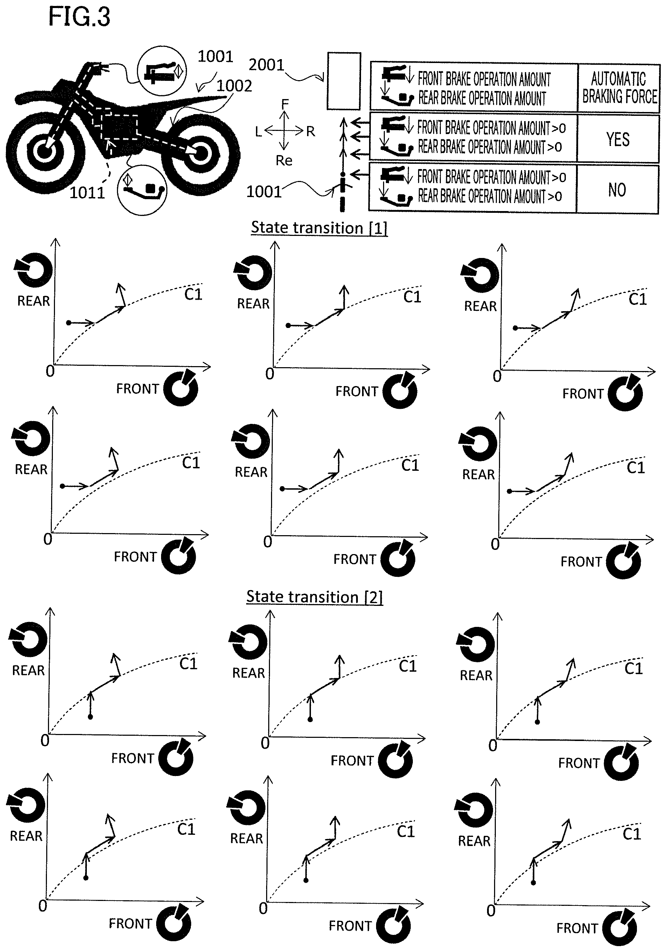

The following will describe a leaning vehicle 1001 of the Third Embodiment of the present teaching with reference to FIG. 3. A brake assist control device 1011 of the Third Embodiment includes the following arrangements, in addition to those of the First Embodiment and Second Embodiment. The brake assist control device 1011 controls the assisting braking force so that the state transitions of the front wheel braking force and the rear wheel braking force include the state transition 4 described below.

State transition 4: After the transition to a state of changing along the ideal braking force distribution C1 when one rider rides so that the front wheel braking force and the rear wheel braking force increase occurs, the transition to a state of departing from the ideal braking force distribution C1 when one rider rides occurs.

In the state of departing from the ideal braking force distribution C1 when one rider rides, for example, the rear wheel braking force may be increased whereas the front wheel braking force may be decreased. Alternatively, for example, the rear wheel braking force may be increased whereas the front wheel braking force may be maintained. Alternatively, for example, the rear wheel braking force may be increased and the front wheel braking force may be increased.

[Fourth Embodiment]

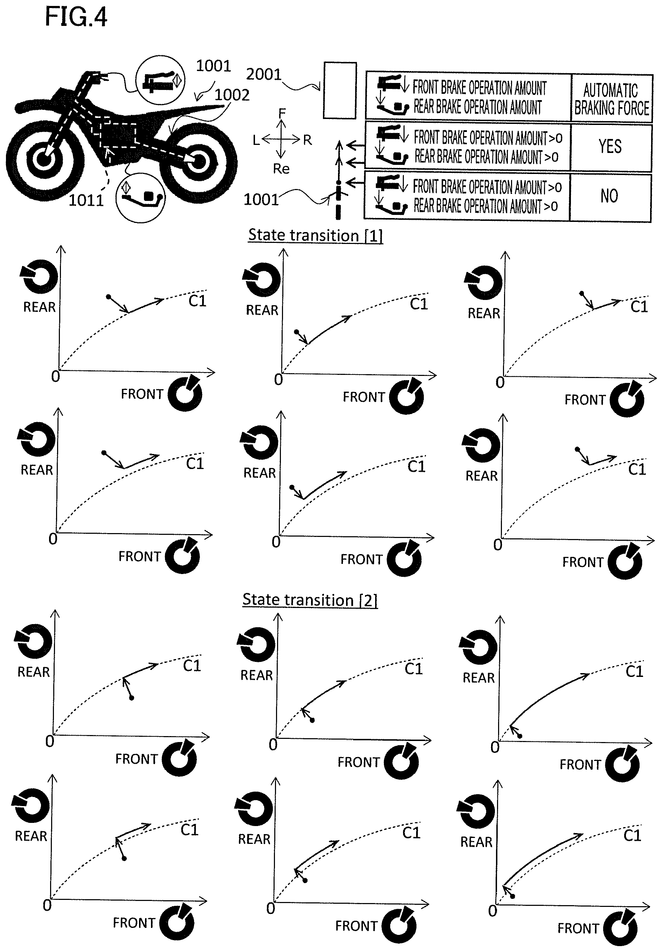

The following will describe a leaning vehicle 1001 of the Fourth Embodiment of the present teaching with reference to FIG. 4. A brake assist control device 1011 of the Fourth Embodiment includes the following arrangements, in addition to those of the First Embodiment, Second Embodiment, or Third Embodiment.

In the state transition 1, the assisting braking force is controlled so that a state where the rear wheel braking force is larger than the rear wheel braking force in the ideal braking force distribution C1 when one rider rides on the leaning vehicle transitions to a state of coming close to the ideal braking force distribution C1 when one rider rides so that the front wheel braking force increases and the rear wheel braking force decreases.

In the state transition 2, the assisting braking force is controlled so that a state where the front wheel braking force is larger than the front wheel braking force in the ideal braking force distribution C1 when one rider rides on the leaning vehicle transitions to a state of coming close to the ideal braking force distribution C1 when one rider rides so that the rear wheel braking force increases and the front wheel braking force decreases.

In the state transition 1, for example, as shown in FIG. 4, the front wheel braking force may be increased and the rear wheel braking force may be decreased, while the total braking force which is the sum total of the front wheel braking force and the rear wheel braking force is increased. Meanwhile, for example, while the total braking force is maintained, the front wheel braking force may be increased whereas the rear wheel braking force may be decreased. Meanwhile, for example, while the total braking force is decreased, the front wheel braking force may be increased whereas the rear wheel braking force may be decreased.

In the state transition 2, for example, as shown in FIG. 4, the rear wheel braking force may be increased and the front wheel braking force may be decreased, while the total braking force which is the sum total of the front wheel braking force and the rear wheel braking force is increased. Meanwhile, for example, while the total braking force is maintained, the rear wheel braking force may be increased whereas the front wheel braking force may be decreased. Meanwhile, for example, while the total braking force is decreased, the rear wheel braking force may be increased whereas the front wheel braking force may be decreased.

[Fifth Embodiment]

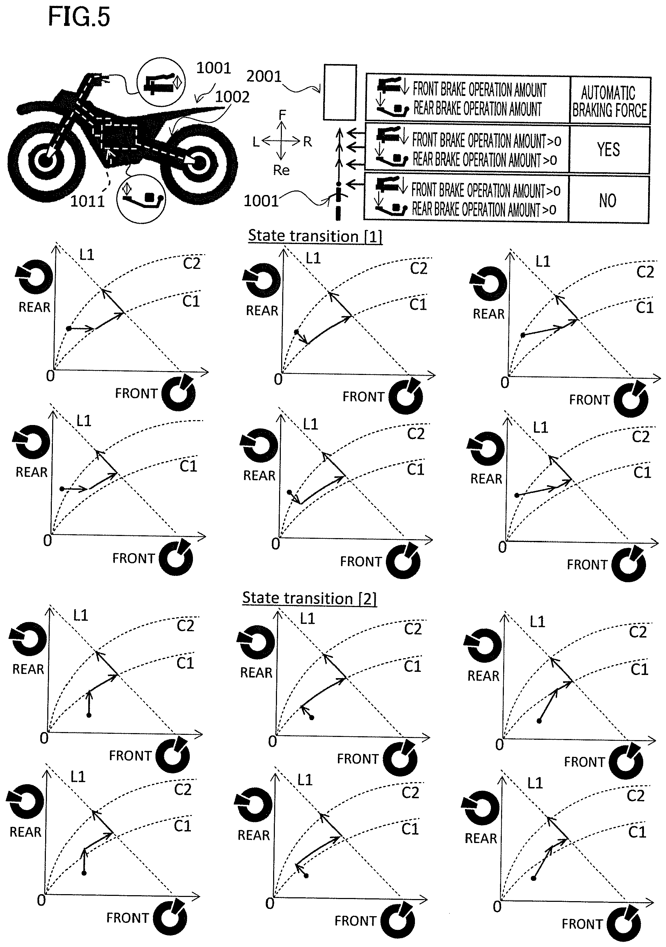

The following will describe a leaning vehicle 1001 of the Fifth Embodiment of the present teaching with reference to FIG. 5. A brake assist control device 1011 of the Fifth Embodiment includes the following arrangements, in addition to those of the First Embodiment, Second Embodiment, Third Embodiment, or Fourth Embodiment. The brake assist control device 1011 controls the assisting braking force so that the state transitions of the front wheel braking force and the rear wheel braking force include the state transition 5 described below.

State transition 5: After the transition to a state of changing along the ideal braking force distribution C1 when one rider rides so that the front wheel braking force and the rear wheel braking force increase occurs and then transition to a state where the total braking force which is the sum total of the front wheel braking force and the rear wheel braking force is increased occurs, transition to a state where the total braking force is maintained occurs.

In FIG. 5, C2 indicates an ideal braking force distribution when two occupants ride, and L1 indicates a braking force distribution with which the total braking force is maintained. In the state where the total braking force is maintained, for example, the front wheel braking force may be decreased and the rear wheel braking force may be increased as shown in FIG. 5. For example, the brake assist control device 1011 may control the assisting braking force so that transition to a state of coming close to the ideal braking force distribution C2 when two occupants ride while the total braking force is maintained occurs. Although not illustrated, in the state where the total braking force is maintained, for example, the front wheel braking force may be increased and the rear wheel braking force may be decreased. Alternatively, for example, the front wheel braking force and the rear wheel braking force may be maintained.

[Sixth Embodiment]

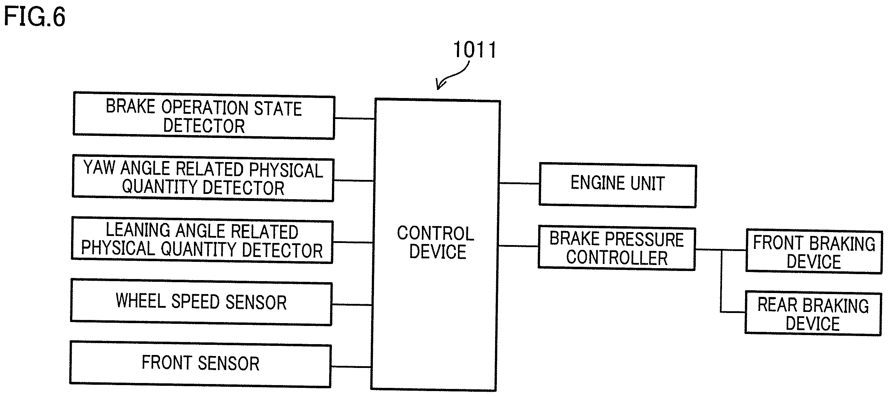

The following will describe a leaning vehicle 1001 of the Sixth Embodiment of the present teaching with reference to FIG. 6. The brake assist control device 1011 of the First Embodiment, Second Embodiment, Third Embodiment, Fourth Embodiment, or Fifth Embodiment may be arranged as described below. The brake assist control device 1011 is electrically connected to a front braking device, a rear braking device, a front detection device which is required to determine a margin which is acquired based on the relationship between an obstacle 2001 and a host vehicle 1001, and a brake operation state detector which is required to acquire an operation amount of a brake operator. Furthermore, the brake assist control device 1011 is electrically connected to an engine unit. The brake assist control device 1011 may or may not be electrically connected to a leaning angle related physical quantity detector required to acquire at least one of the leaning angular speed or leaning angular acceleration. The brake assist control device 1011 may or may not be electrically connected to a yaw angle related physical quantity detector required to acquire at least one of yaw angular speed or yaw angular acceleration.

The front braking device is an example of the front wheel brake or an example of the brake. The rear braking device is an example of the rear wheel brake or an example of the brake. The leaning angle related physical quantity detector is an example of the leaning angle related sensor. The front sensor is an example of the margin related sensor. The brake operation state detector is an example of the brake operation amount related sensor.

[Other Modifications]

The brake assist control device 1011 of the present teaching and the embodiments may control braking force by utilizing the ideal braking force distribution C2 when two occupants ride. The brake assist control device 1011 of the present teaching and the embodiments may control braking force by utilizing the braking force distribution L1 with which the total braking force is maintained.

[Reference Signs List]

1001 leaning vehicle (host vehicle)
1002 leaning vehicle body frame
2001 obstacle
1011 brake assist control device

## Claims

1. A leaning vehicle (1001) comprising a brake assist control device (1011) which is mounted on a leaning vehicle body frame (1002) leaning rightward in a vehicle left-right direction when turning right and leaning leftward in the vehicle left-right direction when turning left and is configured to control an assisting braking force based on a front wheel brake operation amount of a front wheel brake operator, a rear wheel brake operation amount of a rear wheel brake operator, and a margin obtained based on the relationship between an obstacle (2001) and the leaning vehicle (1001),

   in scenes in each of which a state where a front wheel braking force and a rear wheel braking force not including the assisting braking force are generated transitions to a state where a front wheel braking force and a rear wheel braking force including the assisting braking force are generated, based on the front wheel brake operation amount, the rear wheel brake operation amount, and the margin, the brake assist control device (1011) is configured to control the assisting braking force so that state transitions of the front wheel braking force and the rear wheel braking force include at least one of a state transition 1 or a state transition 2, **characterised in that**,
   in the state transition 1, a state where the rear wheel braking force is larger than the rear wheel braking force in an ideal braking force distribution when one rider rides on the leaning vehicle transitions to a state of coming close to the ideal braking force distribution when one rider rides so that at least the front wheel braking force increases, and then the transition to a state of changing along the ideal braking force distribution when one rider rides so that the front wheel braking force and the rear wheel braking force increase occurs, and
   in the state transition 2, a state where the front wheel braking force is larger than the front wheel braking force in the ideal braking force distribution when one rider rides on the leaning vehicle (1001) transitions to the state of coming close to the ideal braking force distribution when one rider rides so that at least the rear wheel braking force increases, and then transition to the state of changing along the ideal braking force distribution when one rider rides so that the front wheel braking force and the rear wheel braking force increase occurs.

2. The leaning vehicle (1001) according to claim 1, wherein the brake assist control device (1011) is configured to control the assisting braking force so that the state transitions of the front wheel braking force and the rear wheel braking force include a state transition 3 with which, after the transition to the state of changing along the ideal braking force distribution when one rider rides so that the front wheel braking force and the rear wheel braking force increase occurs, the transition to a state where the rear wheel braking force is increased whereas the front wheel braking force is decreased occurs.

3. The leaning vehicle (1001) according to claim 1, wherein the brake assist control device (1011) is configured to control the assisting braking force so that the state transitions of the front wheel braking force and the rear wheel braking force include a state transition 4 with which, after the transition to the state of changing along the ideal braking force distribution when one rider rides so that the front wheel braking force and the rear wheel braking force increase occurs, the transition to a state of departing from the ideal braking force distribution when one rider rides occurs.

4. The leaning vehicle (1001) according to any one of claims 1 to 3, wherein,

   in the state transition 1, the brake assist control device (1011) is configured to control the assisting braking force so that the state where the rear wheel braking force is larger than the rear wheel braking force in the ideal braking force distribution when one rider rides on the leaning vehicle (1001) transitions to the state of coming close to the ideal braking force distribution when one rider rides so that the front wheel braking force increases and the rear wheel braking force decreases, and
   in the state transition 2, the brake assist control device (1011) is configured to control the assisting braking force so that the state where the front wheel braking force is larger than the front wheel braking force in the ideal braking force distribution when one rider rides on the leaning vehicle (1001) transitions to the state of coming close to the ideal braking force distribution when one rider rides so that the rear wheel braking force increases and the front wheel braking force decreases.

5. The leaning vehicle (1001) according to any one of claims 1 to 4, wherein the brake assist control device

(1011) is configured to control the assisting braking force so that the state transitions of the front wheel braking force and the rear wheel braking force include a state transition 5 with which,

after the transition to the state of changing along the ideal braking force distribution when one rider rides so that the front wheel braking force and the rear wheel braking force increase occurs and transition to a state where the total braking force which is the sum total of the front wheel braking force and the rear wheel braking force is increased occurs, transition to a state where the total braking force is maintained occurs.

**Patentansprüche**

1. Ein Neigungsfahrzeug (1001) mit einer Bremsassistenzsteuervorrichtung (1011), die an einem Neigungsfahrzeugkörperrahmen (1002) befestigt ist, der sich beim Abbiegen nach rechts in einer Fahrzeug-Links-Rechts-Richtung nach rechts neigt und der sich beim Abbiegen nach links in der Fahrzeug-Links-Rechts-Richtung nach links neigt, und dazu ausgebildet ist, eine Assistenzbremskraft basierend auf einer Vorderrad-Brems-Betätigungsmenge eines Vorderrad-Brems-Betätigers, einer Hinterrad-Brems-Betätigungsmenge eines Hinterrad-Brems-Betätigers und einer Spanne zu steuern, der erhalten wird basierend auf der Beziehung zwischen einem Hindernis (2001) und dem Neigungsfahrzeug (1001),

   in Situationen, bei denen jeweils ein Zustand, bei dem eine Vorderrad-Bremskraft und eine Hinterrad-Bremskraft, die die Assistenzbremskraft nicht beinhalten, erzeugt werden, in einen Zustand übergeht, bei dem eine Vorderrad-Bremskraft und eine Hinterrad-Bremskraft, die die Assistenzbremskraft umfassen, erzeugt werden, basierend auf der Vorderrad-Brems-Betätigungsmenge, der Hinterrad-Brems-Betätigungsmenge und der Spanne die Bremsassistenzsteuervorrichtung (1011) dazu ausgebildet ist, die Assistenzbremskraft so zu steuern, dass Zustandsübergänge der Vorderrad-Bremskraft und der Hinterrad-Bremskraft zumindest einen eines Zustandsübergangs 1 oder eines Zustandsübergangs 2 aufweisen, **dadurch gekennzeichnet, dass**
   bei dem Zustandsübergang 1 ein Zustand, bei dem die Hinterrad-Bremskraft größer ist als die Hinterrad-Bremskraft bei einer idealen Bremskraftverteilung, wenn ein Fahrer auf dem Neigungsfahrzeug fährt, zu einem Zustand übergeht, der der idealen Bremskraftverteilung, wenn ein Fahrer fährt, nahekommt, so dass zumindest die Vorderrad-Bremskraft ansteigt, und dann der Übergang zu einem Zustand einer Änderung entlang der idealen Bremskraftverteilung, wenn ein Fahrer fährt, so dass die Vorderrad-Bremskraft und die Hinterrad-Bremskraft ansteigen, auftritt, und
   bei dem Zustandsübergang 2 ein Zustand, bei dem die Vorderrad-Bremskraft größer ist als die Vorderrad-Bremskraft bei der idealen Bremskraftverteilung, wenn ein Fahrer auf dem Neigungsfahrzeug (1001) fährt, zu dem Zustand übergeht, der der idealen Bremskraftverteilung, wenn ein Fahrer fährt, nahekommt, so dass zumindest die Hinterrad-Bremskraft ansteigt, und dann ein Übergang zu dem Zustand einer Änderung entlang der idealen Bremskraftverteilung, wenn ein Fahrer fährt, so dass die Vorderrad-Bremskraft und die Hinterrad-Bremskraft ansteigen, auftritt.

2. Das Neigungsfahrzeug (1001) gemäß Anspruch 1, bei dem die Bremskraftsteuervorrichtung (1011) dazu ausgebildet ist, die Assistenzbremskraft so zu steuern, dass die Zustandsübergänge der Vorderrad-Bremskraft und der Hinterrad-Bremskraft einen Zustandsübergang 3 beinhalten, mit dem, nach dem Übergang zu dem Zustand einer Änderung entlang der idealen Bremskraftverteilung, wenn ein Fahrer fährt, so dass die Vorderrad-Bremskraft und die Hinterrad-Bremskraft ansteigen, auftritt, der Übergang zu einem Zustand auftritt, bei dem die Hinterrad-Bremskraft erhöht wird, während die Vorderrad-Bremskraft gesenkt wird.

3. Das Neigungsfahrzeug (1001) gemäß Anspruch 1, bei dem die Bremsassistenzsteuervorrichtung (1011) dazu ausgebildet ist, die Assistenzbremskraft so zu steuern, dass die Zustandsübergänge der Vorderrad-Bremskraft und der Hinterrad-Bremskraft einen Zustandsübergang (4) aufweisen, mit dem, nachdem der Übergang zu dem Zustand einer Änderung entlang der idealen Bremskraftverteilung, wenn ein Fahrer fährt, so dass die Vorderrad-Bremskraft und die Hinterrad-Bremskraft ansteigen, auftritt, der Übergang zu einem Zustand eines Abweichens von der idealen Bremskraftverteilung, wenn ein Fahrer fährt, auftritt.

4. Das Neigungsfahrzeug (1001) gemäß einem der Ansprüche 1 bis 3, bei dem

   bei dem Zustandsübergang 1 die Bremsassistenzsteuervorrichtung (1011) dazu ausgebildet ist, die Assistenzbremskraft so zu steuern, dass der Zustand, bei dem die Hinterrad-Bremskraft größer ist als die Hinterrad-Bremskraft bei der idealen Bremskraftverteilung, wenn ein Fahrer auf dem Neigungsfahrzeug (1001) fährt, zu dem Zustand übergeht, der der idealen Bremskraftverteilung, wenn ein Fahrer fährt, nahekommt, so dass die Vorderrad-Bremskraft ansteigt und die Hinterrad-Bremskraft abnimmt, und bei dem Zustandsübergang 2 die Bremsassistenzsteuervorrichtung (1011) dazu ausgebildet ist, die Assistenzbremskraft so zu steuern, dass der Zustand, bei dem die Vorderrad-Bremskraft größer ist als die Vorderrad-Bremskraft bei der idealen Bremskraftverteilung, wenn ein Fahrer auf dem Neigungsfahrzeug (1001) fährt, zu einem Zustand übergeht, der der idealen Bremskraftverteilung, wenn ein Fahrer fährt, nahekommt, so dass die Hinterrad-Bremskraft ansteigt und die Vorderrad-Bremskraft abnimmt.

**5.** Das Neigungsfahrzeug (1001) gemäß einem der Ansprüche 1 bis 4, bei dem die Bremsassistenzsteuervorrichtung (1011) dazu ausgebildet ist, die Assistenzbremskraft so zu steuern, dass die Zustandsübergänge der Vorderrad-Bremskraft und der Hinterrad-Bremskraft einen Zustandsübergang 5 aufweisen, mit dem nachdem der Übergang zu dem Zustand einer Änderung entlang der idealen Bremskraftverteilung, wenn ein Fahrer fährt, so dass die Vorderrad-Bremskraft und die Hinterrad-Bremskraft ansteigen, auftritt, und ein Übergang zu einem Zustand auftritt, bei dem die Gesamtbremskraft, die die Gesamtsumme der Vorderrad-Bremskraft und der Hinterrad-Bremskraft ist, erhöht wird, ein Übergang zu einem Zustand auftritt, bei dem die Gesamtbremskraft beibehalten wird.

## Revendications

**1.** Véhicule à inclinaison (1001) comprenant un dispositif de commande d'assistance au freinage (1011) qui est monté sur un châssis de carrosserie de véhicule à inclinaison (1002) s'inclinant vers la droite dans une direction gauche-droite du véhicule lors d'un virage à droite et s'inclinant vers la gauche dans la direction gauche-droite du véhicule lors d'un virage à gauche et qui est configuré pour commander une force d'assistance au freinage sur base d'une quantité d'actionnement de frein de roue avant d'un actionneur de frein de roue avant, d'une quantité d'actionnement de frein de roue arrière d'un actionneur de frein de roue arrière, et d'une marge obtenue sur base du rapport entre un obstacle (2001) et le véhicule à inclinaison (1001),

dans des scènes dans chacune desquelles un état dans lequel sont générées une force de freinage de la roue avant et une force de freinage de la roue arrière ne comportant pas la force d'assistance au freinage transite à un état dans lequel sont générées une force de freinage de la roue avant et une force de freinage de la roue arrière comportant la force d'assistance au freinage, sur base de la quantité d'actionnement de frein de roue avant, de la quantité d'actionnement de frein de roue arrière et de la marge, le dispositif de commande d'assistance au freinage (1011) est configuré pour commander la force d'assistance au freinage de sorte que les transitions d'état de la force de freinage de la roue avant et de la force de freinage de la roue arrière comportent au moins l'une parmi une transition d'état 1 ou une transition d'état 2, **caractérisé par le fait que**
dans la transition d'état 1, un état dans lequel la force de freinage de la roue arrière est supérieure à la force de freinage de la roue arrière dans une répartition idéale de la force de freinage lorsqu'un conducteur conduit le véhicule à inclinaison transite à un état se rapprochant de la répartition idéale de la force de freinage lorsqu'un conducteur conduit de sorte que se produise au moins **le fait que** la force de freinage de la roue avant augmente, et ensuite la transition à un état de changement le long de la répartition idéale de la force de freinage lorsqu'un conducteur conduit de sorte que la force de freinage de la roue avant et la force de freinage de la roue arrière augmentent, et
dans la transition d'état 2, un état dans lequel la force de freinage de la roue avant est supérieure à la force de freinage de la roue avant dans la répartition idéale de la force de freinage lorsqu'un conducteur conduit le véhicule à inclinaison (1001) transite à l'état de rapprochement de la répartition idéale de la force de freinage lorsqu'un conducteur conduit de sorte que se produise au moins **le fait que** la force de freinage de la roue arrière augmente, et ensuite la transition à l'état de changement le long de la répartition idéale de la force de freinage lorsqu'un conducteur conduit de sorte que la force de freinage de la roue avant et la force de freinage de la roue arrière augmentent.

**2.** Véhicule à inclinaison (1001) selon la revendication 1, dans lequel le dispositif de commande d'assistance au freinage (1011) est configuré pour commander la force d'assistance au freinage de sorte que les transitions d'état de la force de freinage de la roue avant et de la force de freinage de la roue arrière comportent une transition d'état 3 par laquelle, après la transition à l'état de changement le long de la répartition idéale de la force de freinage lorsqu'un conducteur conduit de sorte que se produise le fait que la force de freinage de la roue avant et la force de freinage de la roue arrière augmentent, se produit la transition à un état dans lequel la force de freinage de la roue arrière est augmentée tandis que la force de freinage de la roue avant est diminuée.

**3.** Véhicule à inclinaison (1001) selon la revendication 1, dans lequel le dispositif de commande d'assistance au freinage (1011) est configuré pour commander la force d'assistance au freinage de sorte que les transitions d'état de la force de freinage de la roue avant et de la force de freinage de la roue arrière comportent une transition d'état 4 par laquelle, après la transition à l'état de changement le long de la répartition idéale de la force de freinage lorsqu'un conducteur conduit de sorte que se produise le fait que la force de freinage de la roue avant et la force de freinage de la roue arrière augmentent, se produit la transition à un état d'écartement par rapport à la répartition idéale de la force de freinage lorsqu'un conducteur conduit.

**4.** Véhicule à inclinaison (1001) selon l'une quelconque des revendications 1 à 3, dans lequel,

dans la transition d'état 1, le dispositif de commande d'assistance au freinage (1011) est configuré pour commander la force d'assistance au freinage de sorte que l'état dans lequel la force de freinage de la roue arrière est supérieure à la force de freinage de la roue arrière dans la répartition idéale de la force de freinage lorsqu'un conducteur conduit le véhicule à inclinaison (1001) transite à l'état se rapprochant de la répartition idéale de la force de freinage lorsqu'un conducteur conduit de sorte que la force de freinage de la roue avant augmente et que la force de freinage de la roue arrière diminue, et dans la transition d'état 2, le dispositif de commande d'assistance au freinage (1011) est configuré pour commander la force d'assistance au freinage de sorte que l'état dans lequel la force de freinage de la roue avant est supérieure à la force de freinage de la roue avant dans la répartition idéale de la force de freinage lorsqu'un conducteur conduit le véhicule à inclinaison (1001) transite à l'état se rapprochant de la répartition idéale de la force de freinage lorsqu'un conducteur conduit de sorte que la force de freinage de la roue arrière augmente et que la force de freinage de la roue avant diminue.

**5.** Véhicule à inclinaison (1001) selon l'une quelconque des revendications 1 à 4, dans lequel le dispositif de commande d'assistance au freinage (1011) est configuré pour commander la force d'assistance au freinage de sorte que les transitions d'état de la force de freinage de la roue avant et de la force de freinage de la roue arrière comportent une transition d'état 5 par laquelle, après la transition à l'état de changement le long de la répartition idéale de la force de freinage lorsqu'un conducteur conduit de sorte que se produise le fait que la force de freinage de la roue avant et la force de freinage de la roue arrière augmentent et que se produise la transition à un état dans lequel la force de freinage totale, qui est la somme totale de la force de freinage de la roue avant et de la force de freinage de la roue arrière, est augmentée, que se produise la transition à un état dans lequel la force de freinage totale est maintenue.

# FIG.1

| | FRONT BRAKE OPERATION AMOUNT<br>REAR BRAKE OPERATION AMOUNT | AUTOMATIC<br>BRAKING FORCE |
|---|---|---|
| | FRONT BRAKE OPERATION AMOUNT >0<br>REAR BRAKE OPERATION AMOUNT >0 | YES |
| | FRONT BRAKE OPERATION AMOUNT >0<br>REAR BRAKE OPERATION AMOUNT >0 | NO |

State transition [1]

State transition [2]

# FIG.2

| ![] FRONT BRAKE OPERATION AMOUNT | AUTOMATIC |
| REAR BRAKE OPERATION AMOUNT | BRAKING FORCE |
| FRONT BRAKE OPERATION AMOUNT >0 | YES |
| REAR BRAKE OPERATION AMOUNT >0 | |
| FRONT BRAKE OPERATION AMOUNT >0 | NO |
| REAR BRAKE OPERATION AMOUNT >0 | |

State transition [1]

State transition [2]

# FIG.3

| ↓ FRONT BRAKE OPERATION AMOUNT<br>REAR BRAKE OPERATION AMOUNT | AUTOMATIC BRAKING FORCE |
|---|---|
| ↓ FRONT BRAKE OPERATION AMOUNT > 0<br>REAR BRAKE OPERATION AMOUNT > 0 | YES |
| ↓ FRONT BRAKE OPERATION AMOUNT > 0<br>REAR BRAKE OPERATION AMOUNT > 0 | NO |

State transition [1]

State transition [2]

# FIG.4

| ![front brake] FRONT BRAKE OPERATION AMOUNT ![rear brake] REAR BRAKE OPERATION AMOUNT | AUTOMATIC BRAKING FORCE |
|---|---|
| ![front brake] FRONT BRAKE OPERATION AMOUNT >0 ![rear brake] REAR BRAKE OPERATION AMOUNT >0 | YES |
| ![front brake] FRONT BRAKE OPERATION AMOUNT >0 ![rear brake] REAR BRAKE OPERATION AMOUNT >0 | NO |

State transition [1]

State transition [2]

FIG.5

State transition [1]

State transition [2]

FIG.6

1011

CONTROL DEVICE

ENGINE UNIT

BRAKE PRESSURE CONTROLLER

FRONT BRAKING DEVICE

REAR BRAKING DEVICE

BRAKE OPERATION STATE DETECTOR

YAW ANGLE RELATED PHYSICAL QUANTITY DETECTOR

LEANING ANGLE RELATED PHYSICAL QUANTITY DETECTOR

WHEEL SPEED SENSOR

FRONT SENSOR

**EP 3 967 588 B1**

**REFERENCES CITED IN THE DESCRIPTION**

**Patent documents cited in the description**

- EP 3124370 A2

- JP 2006069303 A